# EUROPEAN PATENT APPLICATION

(11) **EP 4 545 263 A1**
(43) Date of publication of application: **30.04.2025**
(21) Application number: 24734791.7
(22) Date of filing: 28.02.2024
(51) Int. Cl.: B28C 7/16, B28C 5/42, B01F 35/75, B28C 9/00, B65G 65/40, G05B 19/04

(54) **SYSTEM AND METHOD FOR CONTROLLING DEGREE OF OPENING OF DISCHARGE DOOR OF MAIN MIXING MACHINE, AND ELECTRONIC DEVICE, STORAGE MEDIUM AND MIXING PLANT**

(30) Priority: 15.09.2023 CN 202311200792
(71) Applicant: Changde Sany Machinery Co., Ltd., Changde, Hunan 415001 (CN)
(72) Inventor: ZHANG, Bo, Changde Hunan 415001 (CN); WANG, Yanqi, Changde Hunan 415001 (CN); WU, Jun, Changde Hunan 415001 (CN)
(74) Representative: Groth & Co. KB
(86) International application number: PCT/CN2024/079009
(87) International publication number: WO 2025/055269

(57) **Abstract**

The present application provides a system and method for controlling an opening degree of a discharge door of a mixing machine, and relates to the field of automatic control. The system includes a controller and a plurality of discharge positions, wherein the controller is configured to switch between the discharge positions according to a concrete discharge amount in a receiving hopper; the discharge positions are used to adjust the opening degree of the discharge door; the discharge positions include sensing-control positions and a time-control position; the sensing-control positions include a fully-closed position and a preset proportion position; the preset proportion position is provided between a middle position and the fully-closed position, the middle position being a conventional half-open position; and the time-control position is provided between the preset proportion position and a fully-open position, and an opening proportion of the time-control position is determined according to a strength and/or slump of concrete to be discharged. The present application can solve the problem of spillage and scattering and improve the concrete discharge efficiency.

## Description

### CROSS-REFERENCE TO RELATED APPLICATION

The present application claims the priority of Chinese Patent Application No. 202311200792.2, filed with the Chinese Patent Office on September 15, 2023 and entitled "System and Method for Controlling Opening Degree of Discharge Door of Mixing Machine", which is hereby incorporated by reference in its entirety.

### TECHNICAL FIELD

The present application relates to the field of automatic control technology, and in particular to a system and method for controlling an opening degree of a discharge door of a mixing machine, an electronic device, a storage medium, and a mixing station.

### BACKGROUND

In existing discharge door control methods in mixing station machine plants, a discharge door is provided with 3 fixed positions, namely, fully-closed, half-open and fully-open positions, based on a proximity switch. A half-open opening degree is fixed after the proximity switch is fixed, and a half-open time and a fully-open time are maintained by a preset fixed countdown for concrete discharge, thereby accomplishing concrete discharge from a machine.

However, concrete with different properties exhibit different fluidity, resulting in different speeds of flowing into a receiving hopper of a mixer truck, so concrete discharge at a fixed opening degree affects the concrete discharge efficiency, and is liable to cause spillage, scattering, etc. In addition, manually controlling the three-position opening and closing of the discharge door in the prior art takes up a lot of time and energy of an operator, leading to low work efficiency. There is a fixed delay of about 1.5 seconds from the operator discovering spillage and pressing the switch, to a material flow on the site stopping to achieve anti-spillage control. In addition, it generally takes about 3 seconds for response from manual discovery to performing the control. The lengthened control time is also prone to cause spillage or scattering. In summary, existing control methods cannot avoid spillage and scattering and have low efficiency.

### SUMMARY OF THE INVENTION

The present application provides a system and method for controlling an opening degree of a discharge door of a mixing machine, an electronic device, a storage medium, and a mixing station, to solve the problem that existing control methods cannot avoid spillage and scattering and have low efficiency.

The present application provides a system for controlling an opening degree of a discharge door of a mixing machine, including a controller and a plurality of discharge positions, wherein
the controller is configured to switch between the discharge positions according to a concrete discharge amount in a receiving hopper; the discharge positions are used to adjust the opening degree of the discharge door;
the discharge positions include sensing-control positions and a time-control position;
the sensing-control positions include a fully-closed position and a preset proportion position; the preset proportion position is provided between a middle position and the fully-closed position, the middle position being a conventional half-open position; and
the time-control position is provided between the preset proportion position and a fully-open position, and an opening proportion of the time-control position is determined according to a strength and/or slump of concrete to be discharged.

Optionally, an execution time for switching from the preset proportion position to the opening proportion of the time-control position is a first preset duration.

Optionally, the preset proportion position includes at least one preset proportion position, and if there are a plurality of preset proportion positions, at least one of the preset proportion positions is provided between the middle position and the fully-closed position.

Optionally, the sensing-control positions further include the fully-open position.

The present application also provides a method for controlling an opening degree of a discharge door of a mixing machine, wherein the method uses a system for controlling an opening degree of a discharge door of a mixing machine, the system including a controller and a plurality of discharge positions, wherein the discharge positions include sensing-control positions and a time-control position; the sensing-control positions include a fully-closed position and a preset proportion position; and the method includes:
acquiring an opening proportion of the time-control position, wherein the opening proportion of the time-control position is determined according to a strength and/or slump of concrete to be discharged;
opening the discharge door based on the opening proportion of the time-control position;
acquiring a concrete discharge amount in a receiving hopper;
when the concrete discharge amount in the receiving hopper is greater than or equal to a preset spillage warning threshold and less than a preset spillage alarm threshold, switching the opening degree of the discharge door to the preset proportion position; and
when the concrete discharge amount in the receiving hopper is greater than or equal to the preset spillage alarm threshold, switching the opening degree of the discharge door to the fully-closed position.

Optionally, when the concrete discharge amount in the receiving hopper is less than the preset spillage warning threshold, the opening proportion of the time-control position is maintained until a countdown for the opening proportion of the time-control position ends, and a time length of the countdown for the opening proportion of the time-control position is a second preset duration.

Optionally, the sensing-control positions further include a fully-open position, and the method further includes:
when the concrete discharge amount in the receiving hopper is less than or equal to a preset remaining discharge threshold for a third preset duration, skipping the countdown and switching the opening degree of the discharge door to the fully-open position.

Optionally, after switching the opening degree of the discharge door to the preset proportion position, the method further includes:
when the concrete discharge amount in the receiving hopper becomes less than the preset spillage warning threshold, switching the opening degree of the discharge door to the opening proportion of the time-control position.

Optionally, adjusting the opening proportion of the opening degree of the discharge door to the time-control position includes:
executing switching the opening degree of the discharge door from the preset proportion position to the opening proportion of the time-control position over a first preset duration.

Optionally, after switching the opening degree of the discharge door to the fully-closed position, the method further includes:
when the concrete discharge amount in the receiving hopper becomes less than the preset spillage warning threshold, switching the opening degree of the discharge door to the opening proportion of the time-control position.

The present application also provides an electronic device, including a memory, a processor, and a computer program stored in the memory and operable by the processor, wherein when executing the computer program, the processor implements the method for controlling an opening degree of a discharge door of a mixing machine.

The present application also provides a non-transitory computer readable storage configured to store a computer program therein, wherein the computer program, when executed by a processor, implements the method for controlling an opening degree of a discharge door of a mixing machine.

The present application also provides a mixing station including the system for controlling an opening degree of a discharge door of a mixing machine.

According to a system and method for controlling an opening degree of a discharge door of a mixing machine provided in the present application, the system includes a controller and a plurality of discharge positions, wherein the controller is configured to switch between the discharge positions according to a concrete discharge amount in a receiving hopper; the discharge positions are used to adjust the opening degree of the discharge door; the discharge positions include sensing-control positions and a time-control position; the sensing-control positions include a fully-closed position and a preset proportion position; the preset proportion position is provided between a middle position and the fully-closed position, the middle position being a conventional half-open position; and the time-control position is provided between the preset proportion position and a fully-open position, and an opening proportion of the time-control position is determined according to a strength and/or slump of concrete to be discharged. That is, the preset proportion position is provided in the present application, wherein the preset proportion position is provided between the middle position and the fully-closed position, i.e., a discharge door opening degree of the preset proportion position is smaller than that of a fixed middle position of the prior art. In this way, a discharging speed is easier to control, and when there is a risk of spillage or scattering, the present application can ensure that concrete is discharged at a smaller flow speed to avoid spillage or scattering. In addition, the present application also sets the time-control position according to a strength and/or slump of concrete to be discharged, such that materials to be discharged with different strengths and/or slumps may each correspond to an optimal initial opening degree for concrete discharge, which avoids the occurrence of sudden spillage due to too large an initial opening degree, and also avoids affecting the concrete discharge efficiency due to too small an initial opening degree. Moreover, in the present application, the discharge positions are controlled by the controller, thereby controlling the opening degree of the discharge door, which achieves automatic control of the opening degree of the discharge door, improves the control efficiency, and may also avoid spillage or scattering due to untimely control.

### BRIEF DESCRIPTION OF THE DRAWINGS

To more clearly describe technical solutions in the present application or in the prior art, a brief introduction to the drawings for use in description of embodiments or the prior art will be given below. Obviously, the drawings described below represent some embodiments in the present application, and to those of ordinary skill in the art, other drawings may also be obtained based on these drawings without creative work.
Fig. 1 is a structural diagram of system for controlling an opening degree of a discharge door of a mixing machine provided in the present application;
Fig. 2 is a flow diagram of a method for controlling an opening degree of a discharge door of a mixing machine provided in the present application; and
Fig. 3 is a structural diagram of an electronic device provided in the present application.

### DETAILED DESCRIPTION

To make the objects, technical solutions and advantages of the present application clearer, the technical solutions in the present application will be described below clearly and completely in conjunction with the drawings in the present application. Obviously, the embodiments described are part of, but not all of, the embodiments of the present application. All other embodiments obtained by those of ordinary skill in the art without creative work, based on embodiments in the present application, fall into the protection scope of the present application.

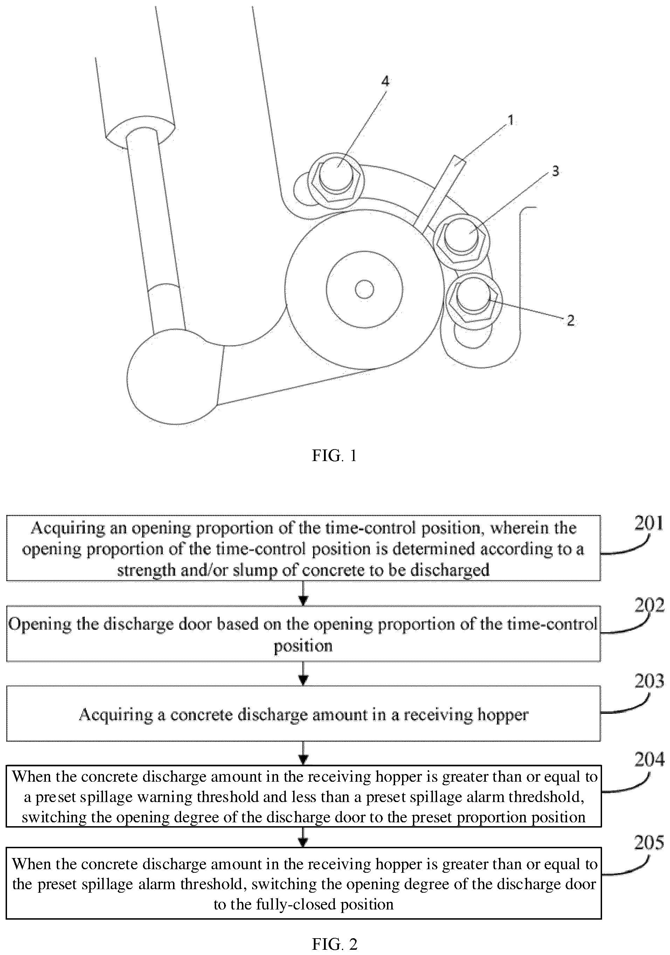

A system and method for controlling an opening degree of a discharge door of a mixing machine of the present application are described below in conjunction with Figs. 1 to 3.

Fig. 1 is a structural diagram of a system for controlling an opening degree of a discharge door of a mixing machine of the present application provided in the present application. As shown in Fig. 1, a system for controlling an opening degree of a discharge door of a mixing machine includes a controller and a plurality of discharge positions.

The controller is configured to switch between the discharge positions according to a concrete discharge amount in a receiving hopper; and the discharge positions are used to adjust the opening degree of the discharge door.

The discharge positions include sensing-control positions and a time-control position 1.

The sensing-control positions include a fully-closed position 2 and a preset proportion position 3; and the preset proportion position 3 is provided between a middle position and the fully-closed position 2, the middle position being a conventional half-open position.

The time-control position 1 is provided between the preset proportion position 3 and a fully-open position 4, and an opening proportion of the time-control position 1 is determined according to a strength and/or slump of concrete to be discharged.

It is to be noted that the conventional half-open position is where a half-open position is located in the prior art.

Specifically, the plurality of discharge positions refer to time-control position 1, the fully-closed position 2, the preset proportion position 3 and the fully-open position 4.

In a specific embodiment, the concrete discharge amount may be a material level height in the hopper.

In the present application, a conventional fixed half-open position is dispensed with, and replaced with the preset proportion position, wherein the preset proportion position is provided between the middle position and the fully-closed position, i.e., a discharge hopper opening degree of the preset proportion position is smaller than that of the fixed half-open position of the prior art. In this way, a discharging speed is easier to control, and when there is a risk of spillage or scattering, the present application can ensure that concrete is discharged at a smaller flow speed to avoid spillage or scattering. In addition, the present application also sets the time-control position according to a strength and slump of a material to be discharged, such that materials to be discharged with different strengths and/or slumps may each correspond to an optimal opening degree for concrete discharge, which fundamentally reduces the occurrence of spillage or scattering. Moreover, in the present application, the discharge positions are controlled by the controller, thereby controlling the opening degree of the discharge door, which achieves automatic control of the opening degree of the discharge door, improves the control efficiency, and may also avoid spillage or scattering due to untimely control.

In a specific embodiment, a preset proportion of the preset proportion position 3 may be selected to be one-third, i.e., it is set to a position closer to the fully-closed position and at one-third of a distance from the fully-closed position to the fully-open position.

In a specific embodiment, the sensing-control positions are indicated specifically by a sensing-control position switch, which is a type of proximity sensor.

In a specific embodiment, the time-control position 1 does not involve a sensor, and its opening proportion is controlled by controlling its execution time (a first preset duration). Specifically, an initial action time of the time-control position 1 is determined according to the strength of concrete to be discharged, and then based on the initial action time, a final execution time, i.e., the first preset duration, is determined by using a correction factor that matches the slump. This can ensure that materials to be discharged with different strengths each correspond to an optimal initial opening degree.

In a specific embodiment, the correction factor κ for the slump takes a value in the range of (0,2], and the execution time = initial action time * κ.

In a specific embodiment, the time-control position 1 is also preset with an opening maintaining countdown, and speed to a time length of the countdown for maintaining the opening proportion of the time-control position is a second preset duration, which is used to start the opening maintaining countdown for the time-control position when the discharge door is opened with the opening degree of the time-control position 1, to ensure that the material to be discharged in the mixing machine can be discharged smoothly with the current opening degree, and the time-control position 1 is closed at an appropriate time to accomplish a whole concrete discharge process.

Further, the second preset duration is preset according to strengths of different concrete to be discharged, and a specific time of the second preset duration may be set according to a time corresponding to an estimated normal flow speed. Specifically, since changing the discharge positions, i.e., adjusting the opening degree of the discharge door, may occur during the concrete discharge process, the second preset duration may be set slightly longer than a time required for the whole concrete discharge process to be carried out entirely with the opening proportion of the time-control position 1, to ensure smooth accomplishment of the concrete discharge process.

Specifically, for a 4-cubic meter mixing machine, the opening maintaining countdown (i.e., the second preset duration) for the time-control position 1 for C30 concrete is about 35 seconds.

In a specific embodiment, the preset proportion position 3 includes at least one preset proportion position, and if there are a plurality of preset proportion positions 3, at least one of the preset proportion positions 3 is provided between the middle position and the fully-closed position 2. That is, a plurality of preset proportion positions may be provided in the present application to meet concrete discharge requirements in different scenarios at different strengths.

In a specific embodiment, the sensing-control positions further include the fully-open position 4, as shown in Fig. 1. The significance of providing the fully-open position in the present application is that when the concrete discharge amount in the receiving hopper is less than or equal to a preset remaining discharge threshold for a third preset duration, the remaining countdown process for the time-control position is skipped, and the opening degree of the discharge door is switched to the fully-open position, which allows the remaining material to be discharged rapidly, and improves the concrete discharge efficiency. It is to be noted that the judgment condition of the third preset duration is set in the present application in order to improve the accuracy of identification, because if the concrete discharge amount in the hopper is detected to be less than or equal to the preset remaining discharge threshold only at a moment, it may be due to a detection error, or an uneven distribution of the material in the hopper, and if the opening degree of the discharge door is switched to the fully-open position at that time, spillage or scattering may occur. Therefore, by the setting that when the concrete discharge amount in the receiving hopper is less than or equal to the preset remaining discharge threshold for the third preset duration (or detecting consecutive frames by using image recognition), the opening degree of the discharge door is switched to the fully-open position, the present application can avoid spillage or scattering and improve the concrete discharge efficiency.

Further, a countdown time length may also be set for the fully-open position 4 in the present application, and the countdown time length for the fully-open position is generally 2-3 seconds, to stop the concrete discharge process in real time after concrete discharge is completed.

In a specific embodiment, the system for controlling an opening degree of a discharge door of a mixing machine may further include a video acquisition module and a display screen. The video acquisition module and the display screen are both connected to the controller. The video acquisition module is configured to acquire images of a concrete discharge process. The display screen is configured to display the images of the concrete discharge process in the form of a video, so that a concrete discharge state can be obtained in real time.

In a specific embodiment, the system for controlling an opening degree of a discharge door of a mixing machine may further include a level detection module configured to detect the concrete discharge amount in the receiving hopper.

In a specific embodiment, there is at least one key detection area, in the hopper, for the level detection module to detect a concrete discharge amount.

If there are 2 key detection areas, in the hopper, for the level detection module to detect concrete discharge amounts, different spill warning thresholds are set respectively for the two key areas correspondingly, and when the concrete discharge amounts in the two key areas are both greater than or equal to the corresponding spillage warning thresholds, it is determined that there is a risk of spillage or scattering.

In addition, different spillage alarm thresholds are also set respectively for the two key areas correspondingly, and when the concrete discharge amount in at least one of the two key areas is greater than or equal to the corresponding spillage alarm threshold, it is determined that there is spillage or scattering.

A method for controlling an opening degree of a discharge door of a mixing machine provided in the present application is described below. For the method for controlling an opening degree of a discharge door of a mixing machine described below and the system for controlling an opening degree of a discharge door of a mixing machine described above, reference may be made to each other correspondingly.

As shown in Fig. 2, the present application also provides a method for controlling an opening degree of a discharge door of a mixing machine. The method uses a system for controlling an opening degree of a discharge door of a mixing machine. The system includes a controller and a plurality of discharge positions. The discharge positions include sensing-control positions and a time-control position. The sensing-control positions include a fully-closed position and a preset proportion position. The method includes the following steps:
Step 201: acquiring an opening proportion of the time-control position, wherein the opening proportion of the time-control position is determined according to a strength and/or slump of concrete to be discharged.
   The strength of concrete to be discharged is determined by an upper computer according to order information of the material to be discharged, and then the upper computer sends corresponding information down to the control system of the present application; the slump of the material to be discharged is detected by a slump detecting module, and then the slump detecting module sends corresponding detection data to the control system of the present application; and finally, the control system of the present application determines the opening proportion of the time-control position by calculation based on the received strength and/or slump of concrete to be discharged.
Step 202: opening the discharge door based on the opening proportion of the time-control position.

In a specific embodiment, initial opening for the time-control position may be opening by a one-time action, and when it needs to switch from the preset proportion position to the opening proportion of the time-control position, the opening proportion of the time-control position is achieved by controlling an execution time of the time-control position by the controller, i.e., switching from the preset proportion position to the opening proportion of the time-control position may be executed over a first preset duration for the time-control position.

In a specific embodiment, the first preset duration may be determined in the following way:
An initial action time is determined according to the strength of material to be discharged, and then based on the initial action time, a final execution time, i.e., the first preset duration, is determined by using a correction factor that matches the slump. This can ensure that materials to be discharged with different strengths each correspond to an optimal initial opening degree.

In a specific embodiment, the correction factor κ for the slump takes a value in the range of (0,2], and the execution time = initial action time * κ.

Step 203: acquiring a concrete discharge amount in a receiving hopper.

The concrete discharge amount in the receiving hopper may be a material level height, which is determined according to a level detection module, and the opening proportion of the time-control position is preset according to the material to be discharged.

Step 204: when the concrete discharge amount in the receiving hopper is greater than or equal to a preset spillage warning threshold, switching the opening degree of the discharge door to the preset proportion position.

In a specific embodiment, when the concrete discharge amount in the receiving hopper is greater than or equal to the preset spillage warning threshold, it indicates that there is a risk of spillage or scattering, so after identifying the risk, the opening degree of the discharge door is adjusted to be smaller by switching from the opening proportion of the initial time-control position to that of the preset proportion position, and by adjusting the opening degree of the discharge door to reduce a discharging speed of the machine, an incoming material speed becomes slower than a feeding speed of a mixer truck to ensure that the concrete discharge amount in the receiving hopper is maintained within a range of less than the preset spillage warning threshold to avoid spillage or scattering.

In a specific embodiment, the spillage warning threshold is generally about 70% of a height of the hopper.

Step 205: when the concrete discharge amount in the receiving hopper is greater than or equal to the preset spillage alarm threshold, switching the opening degree of the discharge door to the fully-closed position.

In a specific embodiment, when the concrete discharge amount in the receiving hopper is greater than or equal to the preset spillage alarm threshold, it is indicated that spillage or scattering is about to occur or has occurred, so it needs to switch from the opening proportion of the initial time-control position to the fully-closed position, and by adjusting the opening degree of the discharge door to suspend discharging from the machine, temporarily stored material in the hopper is discharged to the mixer truck as quickly as possible to ensure that the concrete discharge amount in the hopper is maintained within the range of less than the preset spillage warning threshold to avoid spillage or scattering.

In a specific embodiment, the spillage alarm threshold is generally about 90% of the height of the hopper.

In a specific embodiment, when the concrete discharge amount in the receiving hopper is less than the preset spillage warning threshold, the opening proportion of the time-control position is maintained until a countdown for the opening proportion of the time-control position ends, and a time length of the countdown for the opening proportion of the time-control position is a second preset duration.

That is, the time-control position in the present application is also preset with an opening maintaining countdown, and hopper, for a time length of the countdown for maintaining the opening proportion of the time-control position is a second preset duration, which is used to start the opening maintaining countdown for the time-control position when the discharge door is opened with the opening degree of the time-control position, to ensure that when spillage or scattering does not occur in a whole concrete discharge process, the time-control position is closed at an appropriate time to complete the whole concrete discharge process.

Further, the second preset duration is preset, and a specific time of the second preset duration may be set according to a time corresponding to an estimated normal flow speed. Specifically, since changing the discharge positions, i.e., adjusting the opening degree of the discharge door, may occur during the concrete discharge process, the second preset duration may be set slightly longer than a time required for the whole concrete discharge process to be carried out with the opening degree of the time-control position 1, to ensure smooth accomplishment of the concrete discharge process.

Specifically, the opening maintaining countdown (i.e., the second preset duration) for the time-control position is about 35 seconds.

In a specific embodiment, when the concrete discharge amount in the receiving hopper is less than or equal to a preset remaining discharge threshold for a third preset duration, the countdown is skipped and the opening degree of the discharge door is switched to the fully-open position. Specifically, the judgment condition of the third preset duration is set in the present application in order to improve the accuracy of identification, because if the concrete discharge amount in the hopper is detected to be less than or equal to the preset remaining discharge threshold only at a moment, it may be due to a detection error, or an uneven distribution of the material in the hopper, and if the opening degree of the discharge door is switched to the fully-open position at that time, spillage or scattering may occur. Therefore, it is set in the present application that when the concrete discharge amount in the receiving hopper is less than or equal to the preset remaining discharge threshold for the third preset duration, the opening degree of the discharge door is switched to the fully-open position. Furthermore, switching to the fully-open position enables the remaining material to be discharged as quickly as possible, i.e., this solution in the present application can avoid spillage or scattering and improve the concrete discharge efficiency.

In a specific embodiment, the remaining discharge threshold is generally about 10% of the height of the hopper. In addition, the third preset duration may be 2-3 seconds.

In a specific embodiment, the fully-open position also has an opening maintaining countdown function, which is used to start a fully-open opening maintaining countdown when the discharge door is opened with the fully-open position, because opening the discharge door with the fully-open position is generally applicable when concrete discharge is close to the end, and the fully-open position may be closed at an appropriate time by means of the opening maintaining countdown for the fully-open position to complete the whole concrete discharge process.

It is to be noted that the opening maintaining countdown for the fully-open position is generally 2-3 seconds.

In a specific embodiment, after switching the opening degree of the discharge door to the preset proportion position, the method further includes:
when the concrete discharge amount in the receiving hopper becomes less than the preset spill warning threshold, switching the opening degree of the discharge door to the opening proportion of the time-control position. That is, when the concrete discharge amount in the hopper reaches a normal state (less than the preset spillage warning threshold), concrete is discharged based on the opening proportion of the time-control position that best matches the current material, which can ensure the discharging speed, while reducing, to some extent, the occurrence of spillage or scattering.

In a specific embodiment, switching the opening degree of the discharge door from the preset proportion position to the opening proportion of the time-control position needs to be executed over a first preset duration.

In a specific embodiment, after switching the opening degree of the discharge door to the preset proportion position, the method further includes:
when the concrete discharge amount in the receiving hopper becomes less than the preset spillage warning threshold, switching the opening degree of the discharge door to the opening proportion of the time-control position. That is, when the concrete discharge amount in the hopper reaches a normal state (less than the preset spillage warning threshold), concrete is discharged based on the opening proportion of the time-control position that best matches the current material, which can ensure the discharging speed, while reducing, to some extent, the occurrence of spillage or scattering.

In a specific embodiment, the above control process of the method for controlling an opening degree of a discharge door of a mixing machine may also use a video acquisition module and a display screen for image acquisition and display, to display the concrete discharge process in the form of a video, so that a concrete discharge state can be obtained in real time.

In a specific embodiment, there is at least one key detection area, in the hopper, for a level detection module to detect a concrete discharge amount.

If there are 2 key detection areas, in the hopper, for the level detection module to detect concrete discharge amounts, different spillage warning thresholds are set respectively for the two key areas correspondingly, and when the concrete discharge amounts in the two key areas are both greater than or equal to the corresponding spillage warning thresholds, it is determined that there is a risk of spillage or scattering.

In addition, different spillage alarm thresholds are also set respectively for the two key areas correspondingly, and when the concrete discharge amount in at least one of the two key areas is greater than or equal to the corresponding spillage alarm threshold, it is determined that there is spillage or scattering.

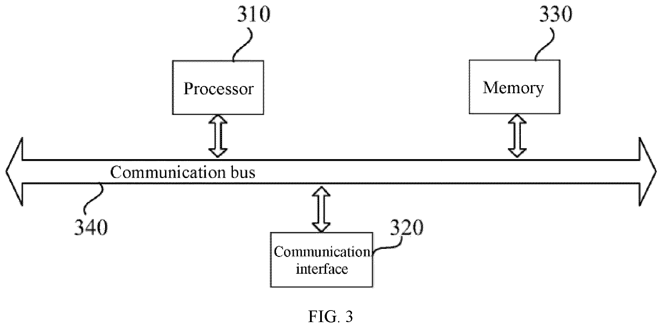

Fig. 3 shows a physical structural diagram of an electronic device. As shown in Fig. 3, the electronic device may include a processor 310, a communications interface 320, a memory 330 and a communication bus 340. The processor 310, the communication interface 320 and the memory 330 communicate with each other via the communication bus 340. The processor 310 may call logic instructions in the memory 330 to perform a method for controlling an opening degree of a discharge door of a mixing machine. The method uses a system for controlling an opening degree of a discharge door of a mixing machine. The system includes a controller and a plurality of discharge positions. The discharge positions include sensing-control positions and a time-control position. The sensing-control positions include a fully-closed position and a preset proportion position. The method includes:
acquiring an opening proportion of the time-control position, wherein the opening proportion of the time-control position is determined according to a strength and/or slump of concrete to be discharged;
opening the discharge door based on the opening proportion of the time-control position;
acquiring a concrete discharge amount in a receiving hopper;
when the concrete discharge amount in the receiving hopper is greater than or equal to a preset spillage warning threshold and less than a preset spillage alarm threshold, switching the opening degree of the discharge door to the preset proportion position; and
when the concrete discharge amount in the receiving hopper is greater than or equal to the preset spillage alarm threshold, switching the opening degree of the discharge door to the fully-closed position.

In addition, the above-mentioned logic instructions in the memory 330 may be stored in a computer-readable storage medium if implemented in the form of a software functional unit and sold or used as a standalone product. With this understanding, the technical solutions of the present application, in essence or for the part contributing to the prior art or for part of the technical solutions, may be embodied in the form of a software product, and the computer software product is stored in a storage medium, and includes a number of instructions configured to cause a computer device (which may be a personal computer, a server, a network device or the like) to perform all or part of the steps of the method described in the embodiments of the present application. The aforementioned storage medium includes: a USB flash disk, a mobile hard disk, a read-only memory (ROM), a random access memory (RAM), a magnetic disk, an optical disk or any of other various media capable of storing program code.

**In** another aspect, the present application also provides a computer program product. The computer program product includes a computer program, which may be stored in a non-transitory computer-readable storage medium. When the computer program is executed by a processor, a computer can perform a method for controlling an opening degree of a discharge door of a mixing machine. The method uses a control system for the opening of a discharge door of a mixing machine. The system includes a controller and a plurality of discharge positions. The discharge positions include sensing-control positions and a time-control position. The sensing-control positions include a fully-closed position and a preset proportion position. The method includes:
acquiring an opening proportion of the time-control position, wherein the opening proportion of the time-control position is determined according to a strength and/or slump of concrete to be discharged;
opening the discharge door based on the opening proportion of the time-control position;
acquiring a concrete discharge amount in a receiving hopper;
when the concrete discharge amount in the receiving hopper is greater than or equal to a preset spillage warning threshold and less than a preset spillage alarm threshold, switching the opening degree of the discharge door to the preset proportion position; and
when the concrete discharge amount in the receiving hopper is greater than or equal to the preset spillage alarm threshold, switching the opening degree of the discharge door to the fully-closed position.

In yet another aspect, the present application also provides a non-transitory computer-readable storage medium configured to store a computer program therein. The computer program, when executed by a processor, implements a method for controlling an opening degree of a discharge door of a mixing machine. The system includes a controller and a plurality of discharge positions. The discharge positions include sensing-control positions and a time-control position. The sensing-control positions include a fully-closed position and a preset proportion position. The method includes:
acquiring an opening proportion of the time-control position, wherein the opening proportion of the time-control position is determined according to a strength and/or slump of concrete to be discharged;
opening the discharge door based on the opening proportion of the time-control position;
acquiring a concrete discharge amount in a receiving hopper;
when the concrete discharge amount in the receiving hopper is greater than or equal to a preset spillage warning threshold and less than a preset spillage alarm threshold, switching the opening degree of the discharge door to the preset proportion position; and
when the concrete discharge amount in the receiving hopper is greater than or equal to the preset spillage alarm threshold, switching the opening degree of the discharge door to the fully-closed position.

The present application also provides a mixing station including the system for controlling an opening degree of a discharge door of a mixing machine.

The apparatus embodiment described above is merely schematic, wherein units described as separate components may be or may be not physically separate, and components shown as units may be or may be not physical units, i.e. may be located in one place, and may also be distributed in multiple network units. Some or all of the modules can be selected according to actual needs to achieve the object of the solution of the embodiment. They may be understood and implemented by those of ordinary skill in the at without creative effort.

From the above description of implementations, those skilled in the art can clearly know that the various implementations may be achieved by means of software and a necessary general-purpose hardware platform, and of course, may also be achieved by hardware. With this understanding, the technical solutions described above, in essence or for the part contributing to the prior art, may be embodied in the form of a software product, and the computer software product may be stored in a computer readable storage medium, such as an ROM/RAM, a magnetic disk, an optical disc or the like, and includes a number of instructions configured to cause a computer device (which may be a personal computer, a server, a network device or the like) to perform the method described in the embodiments or in parts of the embodiments.

Finally, it is to be noted that the above embodiments are only used for illustrating rather than limiting the technical solutions of the present application. Although the present application is described in detail with reference to the foregoing embodiments, those of ordinary skill in the art should understand that they still can make modifications to the technical solutions disclosed in the foregoing embodiments or make equivalent substitutions to part of technical features thereof; and such modifications or substitutions should not cause the essence of the corresponding technical solutions to depart from the spirit and scope of the technical solutions of the embodiments of the present application.

## Claims

1. A system for controlling an opening degree of a discharge door of a mixing machine, comprising a controller and a plurality of discharge positions, wherein
the controller is configured to switch between the discharge positions according to a concrete discharge amount in a receiving hopper; the discharge positions are used to adjust the opening degree of the discharge door;
the discharge positions comprise sensing-control positions and a time-control position;
the sensing-control positions comprise a fully-closed position and a preset proportion position; the preset proportion position is provided between a middle position and the fully-closed position, the middle position being a conventional half-open position; and
the time-control position is provided between the preset proportion position and a fully-open position, and an opening proportion of the time-control position is determined according to a strength and/or slump of concrete to be discharged.

2. The system for controlling an opening degree of a discharge door of a mixing machine according to claim 1, wherein an execution time for switching from the preset proportion position to the opening proportion of the time-control position is a first preset duration.

3. The system for controlling an opening degree of a discharge door of a mixing machine according to claim 1, wherein the preset proportion position comprises at least one preset proportion position, and if there are a plurality of preset proportion positions, at least one of the preset proportion positions is provided between the middle position and the fully-closed position.

4. The system for controlling an opening degree of a discharge door of a mixing machine according to any one of claims 1 to 3, wherein the sensing-control positions further comprise the fully-open position.

5. A method for controlling an opening degree of a discharge door of a mixing machine, wherein the method uses a system for controlling an opening degree of a discharge door of a mixing machine, the system comprising a controller and a plurality of discharge positions, wherein the discharge positions comprise sensing-control positions and a time-control position;
the sensing-control positions comprise a fully-closed position and a preset proportion position; and the method comprises:
acquiring an opening proportion of the time-control position, wherein the opening proportion of the time-control position is determined according to a strength and/or slump of concrete to be discharged;
opening the discharge door based on the opening proportion of the time-control position;
acquiring a concrete discharge amount in a receiving hopper;
when the concrete discharge amount in the receiving hopper is greater than or equal to a preset spillage warning threshold and less than a preset spillage alarm threshold, switching the opening degree of the discharge door to the preset proportion position; and
when the concrete discharge amount in the receiving hopper is greater than or equal to the preset spillage alarm threshold, switching the opening degree of the discharge door to the fully-closed position.

6. The method for controlling an opening degree of a discharge door of a mixing machine according to claim 5, wherein, when the concrete discharge amount in the receiving hopper is less than the preset spillage warning threshold, the opening proportion of the time-control position is maintained until a countdown for the opening proportion of the time-control position ends, and a time length of the countdown for the opening proportion of the time-control position is a second preset duration.

7. The method for controlling an opening degree of a discharge door of a mixing machine according to claim 6, wherein the sensing-control positions further comprise a fully-open position, and the method further comprises:
when the concrete discharge amount in the receiving hopper is less than or equal to a preset remaining discharge threshold for a third preset duration, skipping the countdown and switching the opening degree of the discharge door to the fully-open position.

8. The method for controlling an opening degree of a discharge door of a mixing machine according to claim 5, wherein, after switching the opening degree of the discharge door to the preset proportion position, the method further comprises:
when the concrete discharge amount in the receiving hopper becomes less than the preset spillage warning threshold, switching the opening degree of the discharge door to the opening proportion of the time-control position.

9. The method for controlling an opening degree of a discharge door of a mixing machine according to claim 8, wherein switching the opening degree of the discharge door to the opening proportion of the time-control position comprises:
executing switching the opening degree of the discharge door from the preset proportion position to the opening proportion of the time-control position over a first preset duration.

10. The method for controlling an opening degree of a discharge door of a mixing machine according to claim 5, wherein, after switching the opening degree of the discharge door to the fully-closed position, the method further comprises:
when the concrete discharge amount in the receiving hopper becomes less than the preset spillage warning threshold, switching the opening degree of the discharge door to the opening proportion of the time-control position.

11. An electronic device, comprising a memory, a processor, and a computer program stored in the memory and operable by the processor, wherein, when executing the computer program, the processor implements the method for controlling an opening degree of a discharge door of a mixing machine of any one of claims 5 to 10.

12. A non-transitory computer readable storage medium, configured to store a computer program therein, wherein the computer program, when executed by a processor, implements the method for controlling an opening degree of a discharge door of a mixing machine of any one of claims 5 to 10.

13. A mixing station, comprising the system for controlling an opening degree of a discharge door of a mixing machine of any one of claims 1 to 4.
